(19) Europäisches Patentamt
European Patent Office
Office européen des brevets

(11) **EP 1 726 114 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
*H04L 7/04* *(2006.01)* *G01S 13/28* *(2006.01)*
*H04J 13/00* *(2006.01)*

(21) Anmeldenummer: **06707376.7**

(22) Anmeldetag: **02.03.2006**

(86) Internationale Anmeldenummer:
**PCT/EP2006/001902**

(87) Internationale Veröffentlichungsnummer:
**WO 2006/099934 (28.09.2006 Gazette 2006/39)**

(54) **SCHALTUNGSANORDNUNG UND VERFAHREN ZUM EMPFANG SPEZIELL AUSGEBILDETER CODIERTER SIGNALE**

CIRCUIT ARRANGEMENT AND METHOD FOR RECEIVING SPECIALLY DESIGNED CODED SIGNALS

ENSEMBLE CIRCUIT ET PROCEDE POUR RECEVOIR DES SIGNAUX CODES PRESENTANT UNE FORME PARTICULIERE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.03.2005 EP 05102364**

(43) Veröffentlichungstag der Anmeldung:
**29.11.2006 Patentblatt 2006/48**

(73) Patentinhaber: **Rudershausen, Dr. Reinhart**
**86938 Schondorf a. Ammersee (DE)**

(72) Erfinder: **Rudershausen, Dr. Reinhart**
**86938 Schondorf a. Ammersee (DE)**

(74) Vertreter: **Altenburg, Udo**
**Patent- und Rechtsanwälte**
**Bardehle . Pagenberg . Dost .**
**Altenburg - Geissler**
**Galileiplatz 1**
**81679 München (DE)**

(56) Entgegenhaltungen:
- **GOLAY M J E: "COMPLEMENTARY SERIES" IRE TRANSACTIONS ON INFORMATION THEORY, IEEE INC. NEW YORK, US, Bd. IT-7, Nr. 2, April 1961 (1961-04), Seiten 82-87, XP009050014**
- **FARLEY D T: "ON-LINE DATA PROCESSING TECHNIQUES FOR MST RADARS" RADIO SCIENCE, AMERICAN GEOPHYSICAL UNION, WASHINGTON, DC,, US, Bd. 20, Nr. 6, 1. November 1995 (1995-11-01), Seiten 1177-1184, XP000562055 ISSN: 0048-6604**
- **HUSSAIN M.G.M.: "Principles of high resolution radar based on nonsinusoidal waves - Part I: Signal representation and pulse compression" IEEE TRANS. ON ELECTROMAGNETIC COMPATIBILITY, Bd. 31, Nr. 4, November 1989 (1989-11), Seiten 359-368, XP002333981**
- **FOSTER S ED - INSTITUTE OF ELECTRICAL AND ELECTRONICS ENGINEERS: "IMPULSE RESPONSE MEASUREMENT USING GOLAY CODES" INTERNATIONAL CONFERENCE ON ACOUSTICS, SPEECH & SIGNAL PROCESSING. ICASSP. TOKYO, APRIL 7 - 11, 1986, NEW YORK, IEEE, US, Bd. VOL. 4 CONF. 11, 7. April 1986 (1986-04-07), Seiten 929-932, XP000946259**

EP 1 726 114 B1

**Beschreibung**

**Gebiet der Erfindung**

Die Erfindung bezieht sich auf eine Schaltungsanordnung und ein Verfahren zum Empfang speziell ausgebildeter binär codierter Signale mittels einem Digitalfilter, das die Autokonelationsfunktion zwischen ausgesandtem und empfangenen, binären Signal bildet mit nachgeschaltetem, codiertem Digitalfilter, welches zur Kompression der Impuls-Signalform zu einer schmalen Impulsspitze führt und damit die verbesserte Erkennung aus dem Rauschen bzw. gegenüber Störsignalen und geringeres Nebensprechen ermöglicht.

**Stand der Technik**

Korrelationsfilter, die eine bestimmte Signalform zur theoretisch optimalen Erkennung aus dem Rauschen und zur Verbesserung der Auflösung und Genauigkeit und/oder zu Synchronisationszwecken benutzen, sind in der Signalverarbeitung und Datenübertragung seit langem bekannt. Als Signalfonnen wurden sowohl kontinuierliche Modulationen (lineare, quadratische, logarithmische Frequenzmodulationen), als auch diskrete Modulationen (PSK, phase shift keying binär und mehrphasig) gewählt, siehe z.B. W.S. Burdic, Radar Signal Analysis, Prentice Hall, 1968, S. 193 ff.

Allen Verfahren gemeinsam ist, dass im Korrelationsfilter beim Empfang des Signals (Betrachtung ohne Rauschen oder sonstige Übertragungsfehler) die Autokorrelationsfunktion (AKF) gebildet wird zwischen der Impulsantwort des Filters - die dem ausgesandten Signal (bis auf das Vorzeichen) entspricht - und dem empfangenen Signal.

Es ist auch bekannt, dass bei Verwendung binär codierter Signale die Korrelationsfilter sehr einfach werden. Die binären Barkercodes (W.S. Burdic, Radar Signal Analysis, Prentice Hall, 1968, S. 189) erreichen ein ideales Kompressionsverhältnis von Hauptmaximum N (= Anzahl der Subpulse bzw. Code-Bits) zu Nebenmaximum am Filterausgang, also N : 1, sie sind bekannt bis N = 13. Für binäre Codes wurde bewiesen, dass für größere Anzahlen von Subpulsen N als 13 keine Codes existieren, die die ideale AKF von N : 1 als Signalform erreichen, siehe I.M. Ivanova, Yu. L. Ketkov, and T. S. Yampol'skaya, On the existence of Barkercodes. Izvestiya vyssheishkoly, radiofizika 3 (1960), S. 391-396 und R. Turyn and J.E. Storer: On binary Sequences. Proc. Am. Math. Soc. (1961), S. 394-399. Das heißt, binäre Codes der wünschenswerten, größeren Bitzahlen N gleich 100 bis 1000 haben immer in der AKF störende Nebenmaxima, die zu Fehlentdeckungen oder Fehlmessungen führen. Bisher versuchte man, die störenden Nebenmaxima durch in der Amplitude unterschiedliche Codebewertungen im Korrelationsfilter zu unterdrücken, wobei die Bewertungen von den binären Werten +1 und -1 abweichen und sehr genau für jede AKF ausgerechnet und eingestellt werden müssen. Siehe z.B.: A new algorithm to optimize Barker code sidelobe suppression filters; Hua, Chen Xiao, Oksman, Juhani; IEEE Transactions on Aerospace and Electronic Systems (ISSN 0018-9251), Bd. 26, Juli 1990, S. 673-677.

PN-Sequenzen, insbesondere Gold-Sequenzen, werden für die synchrone Datenübertragung verwendet, da die periodische AKF (PAKF) ein Haupt-/ zu Nebenmaxima-Verhältnis von N zu -1 aufweist. Die aperiodische AKF sowie die KKF und PKKF (periodische Kreuzkorrelationsfunktion) weisen jedoch große Nebenmaxima von mindestens größer Wurzel aus 2N auf. Dies führt zu Störungen und Nebensprechen und bedeutet eine Begrenzung ihrer Anwendungsmöglichkeiten

**Zusammenfassung der Erfindung**

Aufgabe der Erfindung ist es, eine binäre Code-Modulationsart für eine Schaltungsanordnung der beschriebenen Art weiterzubilden.

Eine weitere Aufgabe der Erfindung ist es, eine Schaltungsanordnung der beschriebenen Art durch Verwendung neuer, binärer Signalcodierungen mit zugehörigem digitalen Empfangsfilter so weiterzubilden, dass einmal die Codelänge, die man verwenden will, um den Faktor 10 oder 100 größer ist als beim Barkercode und gleichzeitig die Nebenmaxima in der AKF auf Null gelöscht werden, um optimale Impulskompression zu erreichen.

Die Aufgabe wird erfindungsgemäß durch die Schaltungsanordnung und das Verfahren gemäß der unabhängigen Ansprüche 1 und 5 gelöst. Vorteilhafte Ausführungsfonnen sind in den abhängigen Ansprüchen beschrieben.

Es werden erfindungsgemäße Signalcodes unter Verwendung des jeweils zugehörigen komplementären Codes im digitalen Empfangsfilter in der Art verwendet, dass die Nebenmaxima zu Null gelöscht werden. Nach einem Codegenerierverfahren kann iterativ jeweils die Bitlänge N verdoppelt werden, wobei die Eigenschaft, dass die Nebenmaxima Null sind, erhalten bleibt.

Die Erfindung ermöglicht zudem, dass nur eine Sequenz eines Paares von Sequenzen eines Komplementärcodes übertragen werden muss. Erfindungsgemäß werden Mittel bereitgestellt, so dass die zweite Sequenz des Paares erst im Empfänger erzeugt wird. Die Addition des autokorrelierten empfangenen Codes und des autokorrelierten komplementären Codes, der im Empfänger erzeugt wurde, ergibt ein Hauptmaximum maximaler Höhe unter Auslöschung der Nebenmaxima. Es ist hier von wesentlicher Bedeutung, dass nur eine Sequenz des Paares übertragen werden muss, während die andere Sequenz des Paares im Empfänger erzeugt wird.

Nach einem erfindungsgemäßen Codegenerierverfahren kann iterativ jeweils die Bitlänge N verdoppelt werden, wobei die Eigenschaft, dass die Nebenmaxima Null sind, erhalten bleibt: Folgende Untermengen von Komplementärsequenzen sind für das neuartige, perfekte Korrelations-Matched-Filter geeignet. Ihre Synthese wurde zwar von Golay (1960) und Welti (1959) schon angegeben und von Farley (1985), Hussain (1988), Darnell (1988), Lüke (1992) weiterverfolgt und für Anwendungen vorgeschlagen, jedoch ohne die entscheidende Symmetrieeigenschaft dieser Sequenzen in einer Filterschaltung auszunützen, wie unten beschrieben werden wird:

Ein Beispiel ist das komplementäre Paar der beiden 4-Chip Barkersequenzen:

| Sequenz 1, A | | + | + | + | - | | (Originalsequenz) |
|---|---|---|---|---|---|---|---|
| Sequenz 2, B | | + | - | + | + | | (Komplementärsequenz zu Sequenz 1) |

| AKF1 -1 | 0 | +1 | | +4 | +1 | 0 | -1 | (aus Sequenz 1) |
|---|---|---|---|---|---|---|---|---|
| AKF2 +1 | 0 | -1 | | +4 | -1 | 0 | +1 | (aus Sequenz 2) |
| 0 | 0 | 0 | | +8 | 0 | 0 | 0 | (Summe) |

| Sequenz 3, C: | | - | + | + | + | (Sequenz 1 rückwärts) |
|---|---|---|---|---|---|---|
| Sequenz 4, D: | | + | + | - | + | (Sequenz 2 rückwärts) |

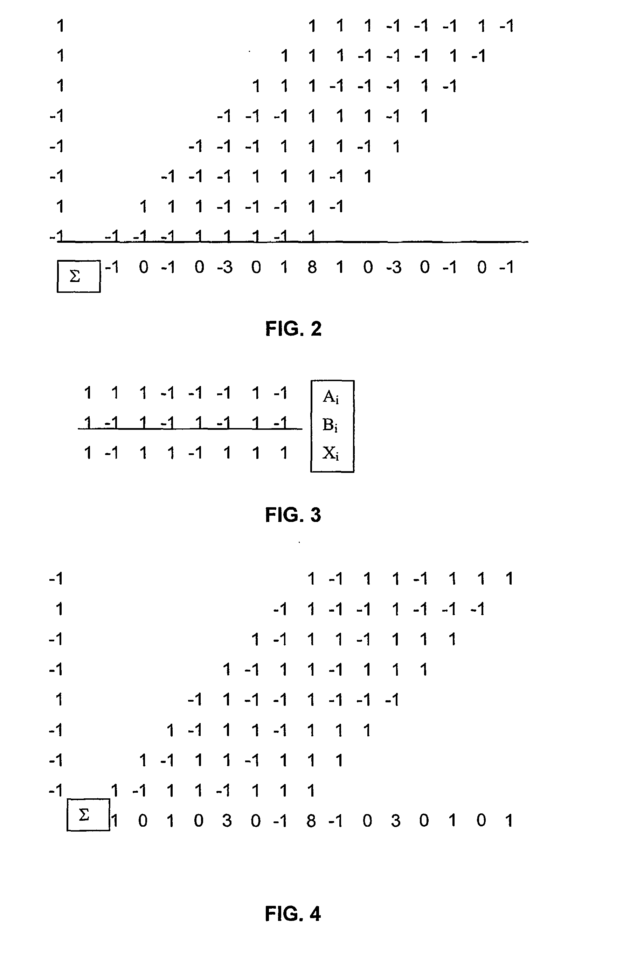

Durch Hintereinandersetzen von jeweils Komplementärpaaren entstehen beliebig lange Komplementärpaare für alle Längen $2^n$. Fig. 3 zeigt als Beispiel eine 8-Chip Komplementärsequenz zusammengesetzt aus den 4-Chip Barkersequenzen A und D' (D' bezeichnet die inverse Sequenz zu D). Jede der vier genannten Barkersequenzen oder deren inverse Sequenzen kann als Ausgangssequenz für das erfindungsgemäße Empfangsfilter mit Komplementärpaaren gewählt werden.

Die Erfindung stellt zudem ein Verfahren zur Bildung eines impulsförmigen Signals in einem Empfangsfilter bereit. Es wird zuerst ein Signalcode mit einem Trägerfrequenzsignal von einer Form +1, +1 oder eines von diesem durch das Symmetriegesetz $X_i = \pm X_{N-1-i} * e^{j\pi i}$ abgeleiteten Code oder durch Zeitumkehr erzeugten Code oder durch Bewertung mit alternierendem Vorzeichen vervielfachtem Code oder eines durch Hintereinandersetzen der genannten Codes vervielfachten Code oder eines durch Hinzufügen einer Quadraturkomponente erzeugten Code oder durch beliebiges, zyklisches Verschieben oder ähnliche Transformationen geänderten Codes, der jeweils die Symmetriebedingung $X_i = \pm X_{N-1-i} * e^{j\pi i}$ erfüllt empfangen. Dann wird ein Signal von dem empfangenen Signal abgezweigt. Das abgezweigte Signal wird mit alternierendem Vorzeichen zum Bilden eines Komplementärcodes multipliziert. Darauf wird eine erste Autokorrelation des empfangenen Signals und eine zweiten Autokorrelation des abgezweigten empfangenen Signals, das mit alternierendem Vorzeichen multipliziert wurde, gebildet. Schließlich werden die Ergebnisse der ersten und zweiten Autokorrelation addiert. Dieses Verfahren kann um weitere Aspekte, die aus dieser Offenbarung hervorgehen, erweitert werden.

Zudem wird erfindungsgemäß ein Übertragungssystem bereitgestellt, das das erfindungsgemäße Verfahren verwendet. Bevorzugt werden zumindest zwei Codes zur Übertragung verwendet, wobei bei der Kreuzkorrelation der zwei Codes keine Nebenmaxima auftreten, insbesondere ist die Kreuzkorrelation der zwei verwendeten Codes Null. Das Übertragungssystem kann auch als Multi-Teilnehmersystem durch Verwenden komplexwertiger Sequenzen ausgelegt sein.

Die Erfindung kann u.a. verwendet werden bei Synchronisation, Systemmesstechnik, sowie im Bereich linearer Antennen mit codierter Apertur und Mehrantennen-Systemen.

**Kurze Beschreibung der Zeichnungen:**

Weitere Aspekte und Vorteile der vorliegenden Erfindung werden aus der Erläuterung der Zeichnungen hervorgehen.

Fig. 1    und 1a zeigen Schaltungsanordnungen gemäß der vorliegenden Erfindung.
Fig. 2    zeigt eine Autokorrelationssummenbildung gemäß der vorliegenden Erfindung.
Fig. 3    zeigt das Bilden eines Komplementärcodes gemäß der vorliegenden Erfindung.
Fig. 4    zeigt eine weitere Autokorrelationssummenbildung gemäß der vorliegenden Erfindung.
Fig. 5    zeigt Addition von Autokorrelationssummen gemäß der vorliegenden Erfindung.

## Detaillierte Beschreibung bevorzugter Ausführungsformen

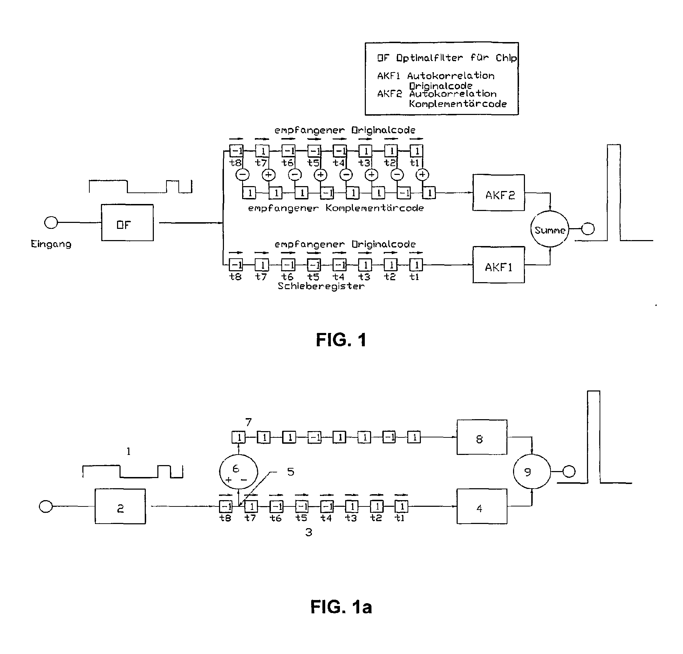

Figur 1a zeigt einen der erfindungsgemäßen Signalcodes 1 ohne Trägerfrequenz mit zwei Phasenstufen 0° und 180°, bestehend aus acht Subpulsen am Empfangsfilter-Eingang. Die Einhüllende des Empfangssignals nach dem Subpulsfilter und D/A-Wandler 2 wird als positive oder negative Digitalzahl, hier symbolisiert als +1 bzw. -1, je nach Phasenlage des ausgesandten Signalcodes, in ein Schieberegister 3 gespeist, das je Subpulsdauer $\tau$ über die Zeit weiterschaltet. Anschließend bildet der Filterteil 4 die Autokorrelationssumme

$$\text{AKF}_k = {}_{i=0}\Sigma^{N-1-k} \, X_i * X_{i+k}$$

z.B. nach dem Schema für den 8-Bit-Code in Fig. 2.

Die genannten Signalcodes haben folgende, innere Symmetrieeigenschaft, die im Empfangsfilter ausgenutzt wird zur idealen Impulskompression ohne Nebenmaxima: Nach der ersten Subpulsdauer $\tau$ wird z.B. am Punkt 5 in Fig. 1a des Schieberegisters 3 ein zweites Signal abgeleitet und abwechselnd im Filterteil 6 mit + und - bewertet. Durch die Bewertung 6 des empfangenen Signalcodes mit der einfachen Folge von alternierenden Phasensprüngen $B_i$ = +, -, +, -, +, -, +, - (oder Digitalwerte +1, -1 usw. oder z.B. L, 0 usw. bei QPSK) entsteht der zugehörige Komplementärcode $X_i$ mit den exakt negativen Nebenmaximawerten verglichen mit dem Originalcode, der ausgesandt wurde, siehe $X_i$ in Fig. 3, für das Beispiel des oben gewählten, optimalen 8-Bit-Code. Die Bewertung 6 in Fig. 1a des empfangenen Signalcodes mit +,- Folge kann auch in paralleler Schaltung erfolgen, wie in Fig. 1 dargestellt.

Die mittels Schieberegister 7 und Filterteil 8 gebildete AKF zu diesem durch +1, -1 Bewertung erzeugten Komplementärcode hat das in Fig. 4 gezeigte, vorteilhafte Resultat mit den komplementären Nebenmaxima zu der AKF des Originalcodes aus Fig. 2.

Der Filterteil 9, gezeigt in Fig. 1a, vor dem Ausgang des Digitalfilters ist eine einfache Addition, nämlich:
Filterausgang =
AKF1 = AKF (empfangener Code korreliert mit gespeichertem Originalcode)
plus
AKF2 = AKF (empfangener Code mal +1, -1-Reihe = Komplementärcode korreliert mit gespeichertem Komplementärcode).

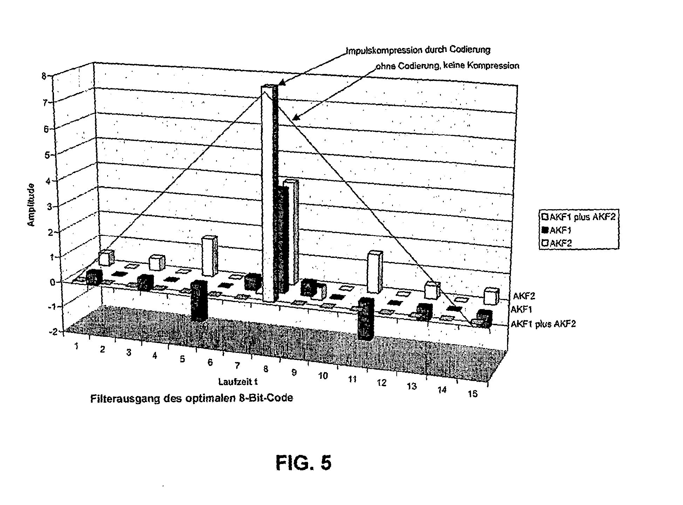

Das Ergebnis ist für den 8-Bit-Code in der Fig. 5 dargestellt, es entsteht die ideale, impulsförmige Empfangs-Signalform ohne Nebenmaxima.

Beide Codes, der hier als Beispiel vorgestellte 8-Bit-Code (Code 1 = A) und sein aus (+1, -1)-Bewertung hervorgegangener Komplementärcode (Code 2 = B), können jeweils als optimale Signalcodes verwendet werden. Zusätzlich gibt es einen dritten und vierten optimalen 8-Bit-Code, indem man die Codefolgen der ersten beiden Codes durch Zeitumkehr rückwärts aussendet. Der dritte und vierte optimale 8-Bit-Code lautet demnach:

-1, +1, -1, -1, -1, +1, +1, +1, (Code 3 = C)

+1, +1, +1, -1, +1, +1, -1, +1, (Code 4 = D)

Die optimalen Signalcodes mit jeweils verdoppelten Längen 16, 32, 64, 128, 256, 512, 1024 usw. von Subpulsen entstehen durch iteratives Codegenerier-Verfahren aus dem Code mit nächst niedrigerer Subpulsanzahl durch Anwenden des Symmetriegesetzes für den Komplementärcode und Fortsetzen damit auf die doppelte Länge in folgender Weise:

$$X_i = X_{N-1-i} * e^{j\pi i}$$

i = 0, 1, .........N-1

Beginnend mit der Länge N = 2 oder 4 können mit dem oben genannten Algorithmus optimale Empfangsfilter bis zu beliebiger Länge $2^N$ aus dem jeweiligen optimalen Code der Länge N-1 hergestellt werden. Die effektive Bandbreite wird bei einem optimalen Korrelationscode mit N Subpulsen um den Faktor N vergrößert (Burdic S. 184). Damit lässt sich die Auflösung der Impulsmessung um den Faktor N verbessern. Die Ausführung der Schaltungsanordnung kann wieder wie im beschriebenen Beispiel gewählt werden, nur mit entsprechend erhöhter Bitzahl N.

Eine weitere Schwierigkeit beim Einsatz bisheriger, binärer Signalcodes ist, dass die Kreuzkorrelation beim Einsatz von zwei verschiedenen Signalcodes störende Nebenmaxima erzeugt. Die vorgestellten beiden Codes 1 und 4 (A, D) stellen demgegenüber einen Satz von Codierungen dar, deren Kreuzkorrelationsfunktionen exakt Null ohne Nebenmaxima sind. In einer weiteren Ausbildung der Erfindung eröffnet dies die Möglichkeit der optimalen, getrennten Erkennung von zwei verschiedenen Signalcodes je Bitlänge N mit den entsprechenden zwei Empfangsfiltern nach Fig. 1a.

Die zwei Sequenzen A und D stellen nicht nur einen Satz orthogonaler Sequenzen dar, ihre Kreuzkorrelationsfunktionen sind zusätzlich exakt Null ohne Nebenmaxima. Dies gilt auch für die zwei inversen Sequenzen A', D' mit der Besonderheit, dass die direkt negative Sequenz zwar ein negatives Hauptmaximum am Filterausgang liefert, dieses jedoch als Fehlentdeckung durch eine positive Schwellwertsetzung unterdrückt werden kann unter Voraussetzung einer Differenzcodierung zur Erhaltung des Vorzeichens nach einem Hüllkurvendetektor. Das Vorzeichen nach einem Hüllkurvendetektor bleibt erhalten, wenn im Sender in einer Differenzcodierung nur die Übergänge von 0 nach L und umgekehrt codiert werden (differentiell kohärente PSK, abgekürzt DPSK). Im Empfänger ist eine Decodierung erforderlich, die diese Änderungen auswertet. Dies eröffnet die Anwendung als Codemultiplexverfahren (CDMA) für die jeweils vier verschiedenen Sequenzen einer Länge N.

Die Anzahl der für ein Codemultiplexverfahren verschiedenen, orthogonalen Komplementärsequenzen mit zusätzlich perfekt verschwindender Kreuzkorrelation - also perfekt unkorrelierte Sequenzen - lässt sich erhöhen durch Übergang auf komplexwertige Sequenzen bei DPSK im Basisband durch Verwenden von Quadraturkomponenten (I-Kanal und Q-Kanal), wobei die perfekten Eigenschaften erhalten bleiben.

Die vier verschiedenen 8-Bit-Sequenzen werden jeweils z.B. mit $e^{j\pi/2}e^{j2\pi/2}e^{j3\pi/2}$ multipliziert, oder anders ausgedrückt, es werden lineare Phasen addiert. So erhält man bereits 8 verschiedene Sequenzen:

| | | | | | | | | |
|---|---|---|---|---|---|---|---|---|
| $A_1 = A$ | +1 | +1 | +1 | -1 | -1 | -1 | +1 | -1 |
| $A_2$ | $+e^{j\pi/2}$ | $+e^{j\pi/2}$ | $+e^{j\pi/2}$ | $-e^{j\pi/2}$ | $-e^{j\pi/2}$ | $-e^{j\pi/2}$ | $+e^{j\pi/2}$ | $-e^{j\pi/2}$ |
| $A_3 = A * e^{j2\pi/2} = A'$ | -1 | -1 | -1 | +1 | +1 | +1 | -1 | +1 |
| $A_4 = A_2 * e^{j3\pi/2}$ | $+e^{j3\pi/2}$ | $+e^{j3\pi/2}$ | $+e^{j3\pi/2}$ | $-e^{j3\pi/2}$ | $-e^{j3\pi/2}$ | $-e^{j3\pi/2}$ | $+e^{j3\pi/2}$ | $+e^{j3\pi/2}$ |
| $D_1 = D$ | +1 | +1 | +1 | -1 | +1 | +1 | -1 | +1 |
| $D_2$ | $+e^{j\pi/2}$ | $+e^{j\pi/2}$ | $+e^{j\pi/2}$ | $-e^{j\pi/2}$ | $+e^{j\pi/2}$ | $+e^{j\pi/2}$ | $-e^{j\pi/2}$ | $+e^{j\pi/2}$ |
| $D_3 = D * e^{j2\pi/2} = D'$ | -1 | -1 | -1 | +1 | -1 | -1 | +1 | -1 |
| $D_4 = D_2 * e^{j3\pi/2}$ | $-e^{j3\pi/2}$ | $-e^{j3\pi/2}$ | $-e^{j3\pi/2}$ | $+e^{j3\pi/2}$ | $-e^{j3\pi/2}$ | $-e^{j3\pi/2}$ | $+e^{j3\pi/2}$ | $-e^{j3\pi/2}$ |

Statt dem Entscheider im Empfangsfilter im Fall binärer Sequenzen, der ein negatives Hauptmaximum unterdrückt, wird im mehrphasigen Fall jedes Hauptmaximum mit einer Phase ungleich Null unterdrückt und nur dasjenige Filter der Filterbank, an dem ein Hauptmaximum ohne Phasenverschiebung auftaucht, lässt das Hauptmaximum als entdecktes Signal durch. Im komplexen Signalraum lassen sich damit auch noch mehr verschiedene, orthogonale Sequenzen generieren, z.B. durch jeweils weiteres Unterteilen der Phasenwinkel, z.B. erhält man mit $e^{j\pi/4}$-Schritten bereits ein CDMA-System für 16 Teilnehmer, mit $e^{j\pi/8}$-Phasenabstand für 32 Teilnehmer oder mit 64-PSK sind Systeme für 128 Teilnehmer möglich, die mit derselben Trägerfrequenz "gebündelt" ausgesandt werden und beim Empfang beim einzelnen Teilnehmer wieder "entbündelt" werden über perfekten Korrelationsempfang der damit vollkommen unkorrelierten Sequenzen.

Die genannten Modulator/Demodulator-Schaltungen lassen sich einfach realisieren mit den heutigen digitalen Signalprozessoren (DSP).

**Patentansprüche**

**1.** Schaltungsanordnung mit einem Optimalfilter für Subpulse mit einem D/A Wandler (2) und einem ersten Schieberegister (3) und einem ersten nachgeschalteten Autokorrelationsfilter (4), wobei die Schaltungsanordnung angepasst ist zur Verwendung eines Signalcodes für das Trägerfrequenz-Sendesignal von einer Form +1, +1, +1, -1, -1, -1, +1, -1 (1) oder eines von diesem durch das Symmetriegesetz $X_i = \pm X_{N-1-i} * e^{j\pi i}$ abgeleiteten Code, wobei N die Zahl der Subpulse bezeichnet und i die ganzen Zahlen von 0 bis N-1 durchläuft, oder durch Zeitumkehr erzeugten Code oder durch Bewertung mit alternierendem Vorzeichen vervielfachtem Code oder eines durch Hintereinandersetzen der genannten Codes vervielfachten Code, der jeweils die Symmetriebedingung $X_i = \pm X_{N-1-i} * e^{j\pi i}$ erfüllt, **dadurch gekennzeichnet, dass**
die Schaltungsanordnung an einem Punkt (5) hinter dem Optimalfilter ein Signal abzweigt, das mit alternierendem Vorzeichen (6) multipliziert wird, um einen Komplementärcode des empfangenen Signalcode (1) im Empfangsfilter zu bilden, und das Signal läuft in ein zweites Schieberegister (7) und ein zweites nachgeschaltetes Autokorrelationsfilter (8); und dass der Ausgang des ersten nachgeschalteten Autokorrelationsfilters (4) und des zweiten Autokorrelationsfilters (8) in einem Filterteil (9) addiert werden.

2. Schaltungsanordnung mit einem Optimalfilter für Subpulse mit einem D/A Wandler (2) und einem ersten Schieberegister (3) und einem ersten nachgeschalteten Autokorrelationsfilter (4), wobei die Schaltungsanordnung angepasst ist zur Verwendung eines Signalcodes für das Trägerfrequenz-Sendesignal von einer Form +1, +1 oder eines von diesem durch das Symmetriegesetz $X_i = \pm X_{N-1-i}{}^* e^{j\pi i}$ abgeleiteten Code, wobei N die Zahl der Subpulse bezeichnet und i die ganzen Zahlen von 0 bis N-1 durchläuft, oder durch Zeitumkehr erzeugten Code oder durch Bewertung mit alternierendem Vorzeichen vervielfachtem Code oder eines durch Hintereinandersetzen der genannten Codes vervielfachten Code oder eines durch Hinzufügen einer Quadraturkomponente erzeugten Code, der jeweils die Symmetriebedingung $X_i = \pm X_{N-1-i} * e^{j\pi i}$ erfüllt,
**dadurch gekennzeichnet, dass**
die Schaltungsanordnung an einem Punkt (5) hinter dem Optimalfilter ein Signal abzweigt, das mit alternierendem Vorzeichen (6) multipliziert wird, um einen Komplementärcode des empfangenen Signalcode (1) im Empfangsfilter zu bilden, und das Signal läuft in ein zweites Schieberegister (7) und ein zweites nachgeschaltetes Autokorrelationsfilter (8); und
dass der Ausgang des ersten nachgeschalteten Autokorrelationsfilters (4) und des zweiten Autokorrelationsfilters (8) in einem Filterteil (9) addiert werden.

3. Schaltungsanordnung nach Anspruch 1 oder 2, wobei die Schaltungsanordnung derart angepasst ist, dass der Komplementärcode des empfangenen Signalcodes (1) durch Bewertung mit alternierendem Vorzeichen im Empfangsfilter gebildet wird in der Art, dass sich am Filterausgang durch Addition der Autokorrelationsfunktionen von empfangenem Signalcode (1) und Komplementärcode, der im Empfangsfilter gebildet wurde, ein Hauptmaximum maximaler Höhe ergibt, während die Nebenmaxima sich durch dieselbe Addition infolge entgegengesetzter Phasenlagen oder Vorzeichen auslöschen.

4. Korrelationsfilter, der angepasst ist für verschiedene, durch Symmetriegesetz abgeleitete Codes nach Anspruch 1 oder 2, wobei für jeden der verschiedenen Codes (1) eine Schaltungsanordnung nach einem der vorhergehenden Ansprüche parallel als Empfangsfilter geschaltet wird, so dass die Kreuzkorrelationsfunktionen verschiedener Signalcodes (1), die nach Anspruch 1 oder 2 gebildet sind, am Filterausgang verschwinden und jedes Korrelationsfilter nur den jeweiligen, im Filter eingestellten Code (1) passieren lässt.

5. Verfahren zur Bildung eines impulsförmigen Signals in einem Empfangsfilter, das die Schritte umfasst:

Empfangen eines Signalcodes mit einem Trägerfrequenzsignal von einer Form +1, +1 oder eines von diesem durch das Symmetriegesetz $X_i = \pm X_{N-1-i} * e^{j\pi i}$ abgeleiteten Code, wobei N die Zahl der Subpulse bezeichnet und i die ganzen Zahlen von 0 bis N-1 durchläuft, oder durch Zeitumkehr erzeugten Code oder durch Bewertung mit alternierendem Vorzeichen vervielfachtem Code oder eines durch Hintereinandersetzen der genannten Codes vervielfachten Code oder eines durch Hinzufügen einer Quadraturkomponente erzeugten Code, der jeweils die Symmetriebedingung $X_i = \pm X_{N-1-i} * e^{j\pi i}$ erfüllt; **dadurch gekennzeichnet, dass** es die folgenden Schritte enthält.
Abzweigen des empfangenen Signals;
Multiplizieren des abgezweigten empfangenen Signals mit alternierendem Vorzeichen zum Bilden eines Komplementärkodes;
Bilden einer ersten Autokorrelation des empfangenen Signals;
Bilden einer zweiten Autokorrelation des abgezweigten empfangenen Signals, das mit alternierendem Vorzeichen multipliziert wurde;
Addieren der Ergebnisse der ersten und zweiten Autokorrelation.

6. Verfahren nach Anspruch 5, wobei sich am Filterausgang durch Addition der ersten Autokorrelation und der zweiten Autokorrelation, die im Empfangsfilter gebildet werden, ein Hauptmaximum maximaler Höhe ergibt, während die Nebenmaxima sich durch dieselbe Addition infolge entgegengesetzter Phasenlagen oder Vorzeichen auslöschen.

7. Übertragungssystem, das das Verfahren nach Anspruch 5 oder 6 verwendet.

8. Übertragungssystem nach Anspruch 7, wobei das Übertragungssystem angepasst ist, zwei erfindungsgemäß gebildete Codes, die gemäß der Vorschrift in Anspruch 5 gebildet sind, zur Übertragung zu verwenden, wobei bei der Kreuzkorrelation der zwei Codes keine Nebenmaxima auftreten.

**9.** Übertragungssystem nach Anspruch 8, wobei die Kreuzkorrelation der zwei Codes Null ist.

**10.** Übertragungssystem nach einem der Ansprüche 7 bis 9, wobei das Übertragungssystem angepasst ist zur Verwendung als Multi-Teilnehmersystem durch Verwenden komplexwertiger Sequenzen, die aus den nach Anspruch 5 erfindungsgemäß gebildeten Sequenzen gebildet sind.

**Claims**

**1.** Circuit arrangement with an optimal filter for sub-pulses with a D/A converter (2) and a first shift register (3) and a first downstream autocorrelation filter (4), wherein the circuit arrangement is adapted to the usage of a signal code for the carrier frequency transmission signal of a form +1, +1, +1, -1, -1, -1, +1, -1 (1) or one code derived therefrom by the symmetry law $X_i = \pm X_{N-1-i} * e^{j\pi i}$, wherein N denotes the number of sub-pulses and i runs through the integer numbers from 0 to N-1, or a code generated by time reversal or a duplicated code by weighting with alternating mathematical sign or a code duplicated by putting said codes in series, which respectively satisfy the symmetry condition $X_i = \pm X_{N-1-i} * e^{j\pi i}$,
**characterized in that**
the circuit arrangement branches off a signal, which is multiplied with alternating mathematical sign (6) at a point (5) after the optimal filter in order to form a complementary code of the received signal code (1) in the reception filter, and the signal runs into a second shift register (7) and a second downstream autocorrelation filter (8); and that the output of the first downstream autocorrelation filter (4) and the second autocorrelation filter (8) in a filter part (9) are added.

**2.** Circuit arrangement with an optimal filter for sub-pulses with a D/A converter (2) and a first shift register (3) and a first downstream autocorrelation filter (4), wherein the circuit arrangement is adapted to the usage of a signal code for the carrier frequency transmission signal of a form +1, +1 or one code derived therefrom by the symmetry law $X_i = \pm X_{N-1-i} * e^{j\pi i}$, wherein N denotes the number of sub-pulses and i runs through the integer numbers from 0 to N-1, or a code generated by time reversal or a duplicated code by weighting with alternating mathematical sign or a code duplicated by putting said codes in series or a code generated by adding a quadrature component, which respectively satisfy the symmetry condition

$$X_i = \pm X_{N-1-i} * e^{j\pi i},$$

**characterized in that**
the circuit arrangement branches off a signal, which is multiplied with alternating mathematical sign (6) at a point (5) after the optimal filter in order to form a complementary code of the received signal code (1) in the reception filter, and the signal runs into a second shift register (7) and a second downstream autocorrelation filter (8); and that the output of the first downstream autocorrelation filter (4) and the second autocorrelation filter (8) in a filter part (9) are added.

**3.** Circuit arrangement according to claim 1 or 2, wherein the circuit arrangement is adapted in such a way that the complementary code of the received signal code (1) is formed by weighting with alternating mathematical sign in the reception filter in such a way that, by summation of the autocorrelation functions of the received signal code (1) and complementary code, which was built in the reception filter, a main maximum builds up at the filter output with maximum height, whereas the secondary maxima cancel themselves by the same summation as a consequence of opposite phasing or mathematical sign.

**4.** Correlation filter, which is adapted for different codes derived by symmetry law according to claim 1 or 2, wherein a circuit arrangement according to one of the previous claims is connected in parallel as reception filter for each of the different codes (1), so that the cross-correlation functions of different signal codes (1) built according to claim 1 or 2 cancel at the filter output, and that the cross correlation filter only lets the respective code (1) pass, which is set in the filter.

**5.** Method for forming a pulse-shaped signal in a reception filter, which comprises the following steps:

receiving a signal code with a carrier frequency signal of a form +1, +1 or a code derived from that by the

symmetry law $X_i = \pm X_{N-1-i} * e^{j\pi i}$, wherein N denotes the number of sub-pulses and i runs through the integer numbers from 0 to N-1, or a code generated by time reversal or a code duplicated by weighting with alternating mathematical sign of a code duplicated by putting the mentioned codes in series or a code generated by addition of a quadrature component, which satisfies the symmetry condition $X_i = \pm X_{N-1-i} * e^{j\pi i}$, respectively; **characterized in that** it comprises the following steps:

branching off the received signal;
multiplying the branched-off received signal with alternating mathematical sign for forming a complementary code;
forming a first autocorrelation of the received signal;
forming a first autocorrelation of the branched-off received signal, which has been multiplied with alternating mathematical sign;
adding the results of the first and second autocorrelations.

6. Method according to claim 5, wherein, by summation of the first autocorrelation and the second autocorrelation, which is formed in the reception filter, a main maximum results at the filter output with maximum height, whereas the secondary maxima cancel each other by the same summation as a consequence of opposite phasing or mathematical sign.

7. Transmission system using the method according to claim 5 or 6.

8. Transmission system according to claim 7, wherein the transmission system is adapted so that two codes formed according to the invention, formed according to the instruction in claim 5, are used for transmission, wherein no secondary maxima appear in the cross correlation of the two codes.

9. Transmission system according to claim 8, wherein the cross correlation of the two codes is zero.

10. Transmission system according to one of claims 7 to 9, wherein the transmission system is adapted for being used as a multi-subscriber system by using sequences with complex values, which are formed from the sequences formed according to claim 5 according to the invention.


**Revendications**

1. Agencement de circuit avec un filtre optimal pour sous-impulsions, avec un convertisseur N/A (2) et un premier registre à décalage (3) et un premier filtre d'autocorrélation aval (4), l'agencement de circuit étant adapté pour utiliser un code de signalisation pour le signal d'émission à fréquence porteuse de la forme +1, +1, +1, -1, -1, -1, +1, -1 (1) ou un code dérivé de celui-ci par la loi de symétrie $X_i = \pm X_{N-1-i} * e^{j\pi i}$, N désignant le nombre de sous-impulsions et i englobant les nombres entiers de 0 à N-1, ou un code généré par inversion du temps ou un code multiplié par pondération avec signe alternant ou un code multiplié en disposant les uns derrière les autres les codes cités, ledit code remplissant la condition de symétrie $X_i = \pm X_{N-1-i} * e^{j\pi i}$, **caractérisé en ce que** l'agencement de circuit dérive, en un point (5) situé derrière le filtre optimal, un signal qui est multiplié par un signe alternant (6) afin de former dans le filtre de réception un code complémentaire du code de signalisation reçu (1), et le signal passe dans un deuxième registre à décalage (7) et un deuxième filtre d'autocorrélation aval (8) ; et **en ce que** la sortie du premier filtre d'autocorrélation aval (4) et celle du deuxième filtre d'autocorrélation (8) sont additionnées dans une partie de filtre (9).

2. Agencement de circuit avec un filtre optimal pour sous-impulsions avec un convertisseur N/A (2) et un premier registre à décalage (3) et un premier filtre d'autocorrélation aval (4), l'agencement de circuit étant adapté pour utiliser un code de signalisation pour le signal d'émission à fréquence porteuse de la forme +1, +1 ou un code dérivé de celui-ci par la loi de symétrie $X_i = \pm X_{N-1-i} * e^{j\pi i}$, N désignant le nombre de sous-impulsions et i englobant les nombres entiers de 0 à N-1, ou un code généré par inversion du temps ou un code multiplié par pondération avec signe alternant ou un code multiplié en disposant les uns derrière les autres les codes cités ou un code généré par ajout d'une composante de quadrature, ledit code remplissant la condition de symétrie $X_i = \pm X_{N-1-i} * e^{j\pi i}$, **caractérisé en ce que** l'agencement de circuit dérive, en un point (5) situé derrière le filtre optimal un signal qui est multiplié par un signe alternant (6) afin de former dans le filtre de réception un code complémentaire du code de signalisation reçu (1), et le signal passe dans un deuxième registre à décalage (7) et un deuxième filtre d'autocorrélation aval (8) ; et la sortie du premier filtre d'autocorrélation aval (4) et celle du deuxième filtre d'autocorrélation (8) sont additionnées dans une partie de filtre (9).

**3.** Agencement de circuit selon la revendication 1 ou 2, l'agencement de circuit étant adapté de façon que le code complémentaire du code de signalisation reçu (1) soit formé par pondération avec signe alternant dans le filtre de réception, de façon à obtenir à la sortie du filtre un maximum principal de hauteur maximale par addition des fonctions d'autocorrélation du code de signalisation reçu (1) et du code complémentaire formé dans le filtre de réception, tandis que les maxima secondaires s'effacent par cette même addition en raison de positions de phase ou de signes contraires.

**4.** Filtre de corrélation adapté à divers codes dérivés par la loi de symétrie selon la revendication 1 ou 2, pour chacun des différents codes (1) un agencement de circuit selon une des revendications précédentes étant monté en parallèle en tant que filtre de réception, de sorte que les fonctions de corrélation croisée des différents codes de signalisation (1) formés selon la revendication 1 ou 2 disparaissent à la sortie du filtre et que chaque filtre de corrélation ne laisse passer que le code (1) adopté dans le filtre.

**5.** Procédé pour former un signal impulsionnel dans un filtre de réception, comprenant les étapes de :

réception d'un code de signalisation avec un signal de fréquence porteuse de forme +1, +1 ou d'un code dérivé de celui-ci par la loi de symétrie $X_i = \pm\, X_{N-1-i} * e^{j\pi i}$, N désignant le nombre de sous-impulsions et i englobant les nombres entiers de 0 à N-1, ou un code généré par inversion du temps ou un code multiplié par pondération avec signe alternant ou un code multiplié en disposant les uns derrière les autres les codes cités ou un code généré par ajout d'une composante de quadrature, ledit code remplissant la condition de symétrie $X_i = \pm\, X_{N-1-i} * e^{j\pi i}$, **caractérisé en ce qu'**il comporte les étapes suivantes :

dérivation du signal reçu ;
multiplication du signal reçu dérivé avec signe alternant pour former un code complémentaire ;
formation d'une première autocorrélation du signal reçu ;
formation d'une deuxième autocorrélation du signal reçu dérivé, lequel a été multiplié avec un signe alternant ; addition des résultats de la première et de la deuxième autocorrélation.

**6.** Procédé selon la revendication 5, un maximum principal de hauteur maximale étant obtenu à la sortie du filtre par addition de la première autocorrélation et de la deuxième autocorrélation formées dans le filtre de réception, tandis que les maxima secondaires s'effacent par cette même addition en raison de positions de phase ou de signes contraires.

**7.** Système de transmission utilisant le procédé selon la revendication 5 ou 6.

**8.** Système de transmission selon la revendication 7, **caractérisé en ce que** le système de transmission est adapté pour utiliser pour la transmission deux codes formés selon l'invention et formés selon la prescription de la revendication 5, aucun maximum secondaire n'apparaissant lors de la corrélation croisée des deux codes.

**9.** Système de transmission selon la revendication 8, la corrélation croisée des deux codes étant nulle.

**10.** Système de transmission selon une des revendications 7 à 9, le système de transmission étant adapté pour être utilisé comme système multi-utilisateurs par l'emploi de séquences à valeur complexe, lesquelles sont formées à partir des séquences formées selon l'invention conformément à la revendication 5.

**FIG. 1**

**FIG. 1a**

```
 1                              1  1  1 -1 -1 -1  1 -1
 1                              1  1  1 -1 -1 -1  1 -1
 1                           1  1  1 -1 -1 -1  1 -1
-1                    -1 -1 -1  1  1  1 -1  1
-1                 -1 -1 -1  1  1  1 -1  1
-1              -1 -1 -1  1  1  1 -1  1
 1           1  1  1 -1 -1 -1  1 -1
-1        -1 -1 -1  1  1  1 -1  1
─────────────────────────────────────────────
[Σ]  -1  0 -1  0 -3  0  1  8  1  0 -3  0 -1  0 -1
```

**FIG. 2**

```
 1  1  1 -1 -1 -1  1 -1    | A_i
 1 -1  1 -1  1 -1  1 -1    | B_i
 1 -1  1  1 -1  1  1  1    | X_i
```

**FIG. 3**

```
-1                              1 -1  1  1 -1  1  1  1
 1                             -1  1 -1 -1  1 -1 -1 -1
-1                           1 -1  1  1 -1  1  1  1
-1                        1 -1  1  1 -1  1  1  1
 1                    -1  1 -1 -1  1 -1 -1 -1
-1                 1 -1  1  1 -1  1  1  1
-1              1 -1  1  1 -1  1  1  1
-1           1 -1  1  1 -1  1  1  1
[Σ]  1  0  1  0  3  0 -1  8 -1  0  3  0  1  0  1
```

**FIG. 4**

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **W.S. BURDIC.** Radar Signal Analysis. Prentice Hall, 1968, 193
- **W.S. BURDIC.** Radar Signal Analysis. Prentice Hall, 1968, 189
- **I.M. IVANOVA ; YU. L. KETKOV ; T. S. YAMPOL'SKAYA.** On the existence of Barkercodes. *Izvestiya vyssheishkoly, radiofizika,* 1960, vol. 3, 391-396
- **R. TURYN ; J.E. STORER.** On binary Sequences. *Proc. Am. Math. Soc,* 1961, 394-399
- **HUA ; CHEN XIAO ; OKSMAN ; JUHANI.** IEEE Transactions on Aerospace and Electronic Systems. Juli 1990, vol. 26, 673-677